Europäisches Patentamt

European Patent Office

Office européen des brevets

(19)

(11) Publication number: **O 015 589**
**B1**

(12) **EUROPEAN PATENT SPECIFICATION**

(45) Date of publication of patent specification: **30.11.83**

(51) Int. Cl.³: **C 22 B 60/02, C 01 B 25/46**

(21) Application number: **80200059.6**

(22) Date of filing: **22.01.80**

(54) **Process for recovering a uranium-containing concentrate and purified phosphoric acid from wet-process phosphoric acid, and products thus obtained.**

(30) Priority: **25.01.79 NL 7900579**
**25.01.79 NL 7900580**
**25.01.79 NL 7900581**

(43) Date of publication of application:
**17.09.80 Bulletin 80/19**

(45) Publication of the grant of the patent:
**30.11.83 Bulletin 83/48**

(84) Designated Contracting States:
**BE DE FR GB IT NL**

(56) References cited:
**FR - A - 2 327 961**
**GB - A - 1 342 344**
**GB - A - 1 344 651**
**US - A - 3 880 980**
**US - A - 3 937 783**
**US - A - 3 965 238**
**US - A - 4 152 402**
**US - H - 952 002**
**US - H - 970 007**

(73) Proprietor: **STAMICARBON B.V.**
**Postbus 10**
**NL-6160 MC Geleen (NL)**

(72) Inventor: **Weterings, Cornelis Antonius**
**Schinekssstraat 18**
**NL-6171 AN Stein (NL)**
Inventor: **Janssen, Johannes Anna**
**Kloosterlaan 36**
**NL-6451 ER Schinveld (NL)**

(74) Representative: **Roeffen, Wilhelmus Johannes Maria et al,**
**OCTROOIBUREAU DSM Postbus 9**
**NL-6160 MA Geleen (NL)**

Courier Press, Leamington Spa, England.

## Process for recovering a uranium-containing concentrate and purified phosphoric acid from wet-process phosphoric acid, and products thus obtained

The invention relates to a process for recovering a uranium-containing concentrate and purified phosphoric acid from wet-process phosphoric acid by treating this with a precipitant, in the presence of a reducing agent and an organic dispersant, separating out the resultant precipitate, and recovering the phosphoric acid from the remaining mixture of phosphoric acid and dispersant.

A process of this kind is known from US—H—970,007, where as organic dispersant a water-miscible organic solvent, such as methanol, ethanol, and/or isopropanol, and as precipitant ammonia or an ammonium salt are used. The uranium is recovered in a known way from the uranium-containing precipitate formed. The solvent used (methanol) is recovered by distillation and rectification, and recycled. A disadvantage of this known process is that for effecting a satisfactory precipitation of the uranium from the phosphoric acid very large quantities of ammonia and/or ammonium salts are needed. This results in a relatively high proportion of the phosphoric acid being bound as ammonium phosphate, which, moreover, is so contaminated that it is practically only suitable for use as a fertilizer. In addition, the amount of this phosphate precipitate containing the uranium is fairly large, so that processing of this precipitate is also a rather costly affair. Another disadvantage of this process is that very large quantities of solvent are needed, the recovery of which, for instance by distillation and rectification involves rather considerable expenditure on equipment as well as energy. Also, this recovery gives rise to solvent losses.

The present invention provides a process offering the possibility of virtually quantitative recovery of the uranium and other metals contained in the phosphoric acid, by means of relatively small amounts of precipitant, and with appreciably smaller quantities of dispersant. According to the invention this is achieved by using an aliphatic ketone as organic dispersant. Aliphatic ketones suitable for use are acetone and methyl-ethylketone. Preferably use is made of the cheaper acetone.

The amount of ketone required may vary within wide limits, partly in dependence on the quantity and on the kind of precipitant used.

As precipitant use can be made of ammonia and/or ammonium salts, such as ammonium-carbonate, ammoniumbicarbonate, ammoniumnitrate and/or ammoniumphosphate. When using such a precipitant an amount of 0.06—5% by weight, calculated as $NH_3$, of the precipitant and 900—250% by weight of ketone, calculated in relation to the amount by weight of $P_2O_5$ in the phosphoric acid has to be applied to achieve a uranium precipitation efficiency of more than 90%. If use is made of phosphoric acid having a $P_2O_5$ concentration of 50% by weight or more, the amount of precipitant will by preference be from 0.1 to 1% by weight, calculated as $NH_3$, and the amount of ketone from 600 to 300% by weight, related to the quantity of $P_2O_5$.

Preferably as precipitant use is made of an inorganic fluorine compound, because in that case a smaller quantity of ketone can be used, and also the losses of phosphoric acid due to the formation of ammonium phosphate are considerably reduced or even completely eliminated. The inorganic fluorine compounds that can be used include ammoniumfluoride, alkali metal fluorides, earthalkali metal fluorides, hydrogen fluoride, and mixtures of these. Silicofluorides, hydrofluosilicic acid, mixed fluorides such as cryolite, and acid fluorides such as ammonium bifluoride can also be used. It has been found that ammonium fluoride is by far the most preferable precipitant, because a smaller quantity of it is needed for precipitating a given quantity of uranium. The fluorine compound can in various ways be added to the phosphoric acid, for instance as a solid, in liquid form, or as a solution. The quantity of fluorine compound required may vary within wide limits, partly in dependence on the quantity of ketone used. To reach a uranium precipitation efficiency of more than 90% an amount of ketone of from 120 to 900% by weight, and an amount of fluorine compound of from 7 to 0.15% by weight, calculated as fluorine, in relation to the amount by weight of $P_2O_5$ in the phosphoric acid are applied. Preferably a quantity of fluorine compound of from 0.5 to 5% by weight, calculated as fluorine in relation to the $P_2O_5$, and a quantity of ketone of from 450 to 160% by weight, calculated in relation to the $P_2O_5$, is used. When using acetone as a dispersant and ammonium fluoride as precipitant, by preference use is made of an amount of acetone of from 200 to 450% by weight and an amount of ammoniumfluoride of from 3 to 0.5% by weight, calculated as fluorine, in relation to the amount by weight of $P_2O_5$ in the phosphoric acid.

From US—H—952,002 it is known to treat wet-process phosphoric acid with acetone and ammonia to separate most of the metallic and anionic impurities.

A disadvantage of this known process is that only about 75% of the phosphoric acid fed in is recovered in a relatively pure form, while the balance is recovered as a very impure acid containing the bulk of the impurities and metallic values, which are not separated off nor recovered. Moreover, the uranium compounds present in the phosphoric acid fed in, which are in the hexavalent state, do not precipitate at all or only to a very small extent and hence remain divided throughout both acid fractions.

A reducing agent is added to the phosphoric acid during the treatment, to reduce the uranium compounds from the hexavalent to the tetravalent state. There is particular advantage in adding the reducing agent after the precipitant, as in this case a smaller amount of precipitate is formed, which amount nevertheless contains virtually all of the uranium. Among the reducing agents that can be used

2

**0 015 589**

are powdered metallic iron, zinc and aluminium. Optionally, electrolytic reduction may be applied. By preference powdered metallic iron is used as reducing agent. The amount of reducing agent is not critical, but by preference such a quantity will be used as will reduce all of the uranium to the tetravalent state.

By preference, first the precipitant is added to the phosphoric acid, and next the ketone is added to the mixture. A small amount of precipitate that may have formed after addition of the precipitant may, if so desired, be removed before the phosphoric acid is subjected to further treatment, for instance by filtration.

The process according to the invention can, in principle, be applied to any kind of wet-process phosphoric acid. Both the so-called green wet-process phosphoric acid (obtained from calcined rock phosphate) and the so-called black wet-process phosphoric acid (which contains a quantity of organic contaminants) can be subjected to the process according to the invention without having undergone a prior treatment. Without any other treatment being required the process can also be used for both dilute phosphoric acid (called filter-grade acid) and concentrated phosphoric acid, and even for the so-called superphosphoric acids.

It has been found particularly advantageous to use phosphoric acid with a low sulphate content, because then an even smaller amount of precipitant and/or ketone will suffice. Thus by preference use is made of wet-process phosphoric acid with a sulphate content below 0.6% by weight, calculated in relation to the amount by weight of $P_2O_5$. A wet-process phosphoric acid with such a low sulphate content can, for instance, be obtained by digesting the rock phosphate with an equivalent quantity of sulphuric acid, or even with a deficiency of sulphuric acid. This, however, has certain disadvantages, such as a greatly reduced digestion efficiency and a poor gypsum quality, and is, therefore, not an attractive method. Another possibility to obtain wet-process phosphoric acid with such a low sulphate content is to remove the sulphate from wet-process phosphoric acid obtained by digesting rock phosphate with an excess of $H_2SO_4$, e.g. by extraction with an organic solvent. By preference, the sulphate content of the wet-process phosphoric acid is given the above-mentioned value by adding to the phosphoric acid a compound that reacts with $SO_4$-ions to form a compound that is insoluble in phosphoric acid, and separating out the precipitate formed. Examples of such compounds are oxides and salts of bivalent metals, such as carbonates, sulphides, nitrates, phosphates, and chlorides of calcium, magnesium and barium. By preference, a calcium compound and/or barium compound that is soluble in phosphoric acid is used as compound reactive with $SO_4$-ions. Particularly suitable calcium compounds and/or barium compounds are carbonates and sulphides, for when applying these the anions are not left behind in the phosphoric acid. When using a calcium compound as compound reactive with $SO_4$-ions, it has been found that for effecting a faster precipitation of calcium sulphate it is advantageous to accomplish this in the presence of part, viz. up to 10% by weight, of the total amount of ketone required for the uranium precipitation. The quantity of compound reactive with $SO_4$-ions to be added is not critical, but needs only be sufficient to react with so much of the sulphate in the phosphoric acid that the remaining sulphate content is reduced to below 0.6% by weight, calculated in relation to the quantity by weight of $P_2O_5$. By preference, an amount of reactive compound is used that is at least equivalent to the amount of sulphate in the phosphoric acid. If a compound reactive with $SO_4$-ions is used that also reacts with other components present in the phosphoric acid, the amount of compound used should of course be adjusted proportionally. The precipitate formed after the addition of the compound reactive with $SO_4$-ions can be separated from the wet-process phosphoric acid in various ways, e.g. by filtration, centrifugation, decantation. Besides the insoluble compound formed, e.g. calcium sulphate and/or barium sulphate when use is made of calcium compounds and/or barium compounds, the precipitate also contains part of the fluorine compounds and metal contaminants present in the wet-process phosphoric acid. Among the factors determining the amount of this contamination of the sulphate precipitate are the nature and quantity of the compound used and of the type of wet-process phosphoric acid used. The precipitate can be upgraded in various ways, optionally with recovery of the original compound reactive with $SO_4$-ions.

The uranium-containing precipitate formed in the process contains, in addition to uranium, the greater part of the metals present in the wet-process phosphoric acid, e.g. magnesium, aluminium, cobalt, vanadium, yttrium, strontium, lead, and rare earth metals, such as lanthanum and cerium. This precipitate can be separated from the mixture of phosphoric acid and ketone in various ways, e.g. by filtration or centrifugation. The uranium-containing concentrate recovered may, if so desired, be upgraded in various ways known in themselves.

The mixture of phosphoric acid and ketone (and water) resulting after recovery of the uranium-containing precipitate can be separated in various ways, e.g. by distillation, decantation or extraction, whereupon the ketone recovered, whether or not after having been subjected to a further treatment, such as rectification, can be recycled to the precipitation step.

The remaining phosphoric acid, which is practically free of all metal contaminants, can be used for various purposes, e.g. as a raw material for the preparation of high-grade fertilizer products, technical-grade phosphates, and animal-feed phosphate.

The invention will be further elucidated in the following examples:

3

**0 015 589**

### Example 1

An amount of 100 grams of wet-process phosphoric acid with a $P_2O_5$ content of 53% by weight was introduced into a beaker. To this, 2.4 grams of solid ammoniumbicarbonate were added, after which the mixture was stirred for about 1 minute. Thereafter 4 g of iron wire were added the mixture stirred for 30 minutes, and subsequently the iron was removed from the liquid with a magnet. Whilst the resulting liquid was being stirred, 212 g of acetone were added to it, whereupon a precipitate formed. After 1 hour's settling the precipitate was filtered off, which yielded 3.5 g of solid substance.

The filtrate was vacuum-distilled, yielding acetone as the top product and a phosphoric acid solution as the bottom product.

A measurement showed more than 90% of the uranium originally contained in the phosphoric acid to have been precipitated.

### Examples 2—12

In the same way as in Example 1, 100 g of wet-process phosphoric acid with a $P_2O_5$ content of 53% by weight were treated with 4 g of iron and varying amounts of ammoniumbicarbonate and organic dispersant.

The results are summarized in Table I below. Example 12 is a comparative example. The abbreviation MEK stands for methylethylketone.

TABLE I

| Expt. No. | $NH_4HCO_3$ as g $NH_3$ per 100 g $P_2O_5$ | Dispersant, g/100 g $P_2O_5$ | Uranium precipitation efficiency, % |
|---|---|---|---|
| 1 | 1 g | 400 g acetone | >90 |
| 2 | 4.8 g | 265 g acetone | >90 |
| 3 | 4.8 g | 260 g MEK | >90 |
| 4 | 4 g | 330 g acetone | >90 |
| 5 | 4 g | 330 g MEK | >90 |
| 6 | 3 g | 345 g acetone | >90 |
| 7 | 3 g | 345 g MEK | >90 |
| 8 | 0.35 g | 450 g acetone | >90 |
| 9 | 0.35 g | 460 g MEK | >90 |
| 10 | 0.09 g | 600 g acetone | >90 |
| 11 | 0.09 g | 600 g MEK | >90 |
| 12 | 1 g | 500 g methanol | 60 |

### Examples 13—20

In the same way as in Example 1, 100 g of wet-process phosphoric acid, with a $P_2O_5$ content of 30%, was treated with 4 g of iron and varying quantities of ammoniumbicarbonate and organic dispersant.

The results are summarized in Table II below. Example 20 is a comparative example.

4

**0 015 589**

TABLE II

| Expt. No. | $NH_4HCO_3$ as g $NH_3$ per 100 g $P_2O_5$ | Dispersant, g/100 g $P_2O_5$ | Uranium precipitation efficiency, % |
|---|---|---|---|
| 13 | 1.2 g | 800 g acetone | >90 |
| 14 | 1.2 g | 800 g MEK | >90 |
| 15 | 2.3 g | 633 g acetone | >90 |
| 16 | 3.3 g | 530 g acetone | >90 |
| 17 | 3.3 g | 530 g MEK | >90 |
| 18 | 0.08 g | 900 g acetone | >90 |
| 19 | 0.08 g | 900 g MEK | >90 |
| 20 | 0.35 g | 900 g methanol | 15—20 |

Example 21

In the same way as Example 1, 100 g of wet-process phosphoric acid having a $P_2O_5$ content of 30% by weight was treated with 4 g of iron, an ammonium salt and acetone. The ammonium salt used was a mixture of ammonia and ammoniumnitrate, in an amount corresponding to 2.5 g of $NH_3$ per 100 g of $P_2O_5$. When use was made of 650 g of acetone per 100 g of $P_2O_5$, the uranium precipitation efficiency was >90%.

Example 22

An amount of 100 grams of wet-process phosphoric acid, of the composition given in Table III below, was introduced into a beaker. Next 4 grams of iron wire were added, and the mixture was stirred for thirty minutes, whereupon the iron was removed from the liquid with a magnet. To the remaining liquid 500 mg of solid ammonium fluoride were added, after which the mixture was stirred for about 1 minute. Subsequently 186 grams of acetone were added whilst the liquid was being stirred, whereupon a precipitate formed. After 1 hour's settling the precipitate was filtered off, which yielded 6 grams of solid substance. The filtrate was vacuum-distilled, yielding acetone as top product and a phosphoric acid solution as bottom product. The composition of this phosphoric acid was determined and is shown in Table III below.

5

TABLE III

| | Original phosphoric acid | Phosphoric acid after filtration |
|---|---|---|
| $P_2O_5$ | 29.1% | 29.7% |
| $SiO_2$ | 0.72% | 0.14% |
| Al | 0.23% | 0.01% |
| $SO_4$ | 1.5% | 0.9% |
| K | 0.04% | <0.01% |
| Ca | 0.62% | 0.09% |
| Fe | 0.25% | 0.20% |
| F | 1.6% | 0.22% |
| V | 135 ppm | 20 ppm |
| Cd | 10 ppm | <4 ppm |
| Ti | 29 ppm | 7 ppm |
| U | 120 ppm | 16 ppm |

From the analytical results it is obvious that the resulting phosphoric acid contained a much lower content of contaminants than the original wet-process phosphoric acid. The uranium content had decreased from 120 to 16 ppm. This implies that the uranium precipitation efficiency was >87%.

Example 23

Example 22 was repeated on the understanding that first the treatment with ammonium fluoride and next the addition of iron took place. Filtration of the precipitate now yielded an amount of 4 grams of solid substance. The other results were the same as those of Example 22.

Examples 24—28

In the same way as in Example 22, 100 grams of wet-process phosphoric acid of the same composition as in Example 22 was treated with 4 grams of iron, varying amounts of ammonium fluoride and organic dispersant. The results are summarized in Table IV below.

TABLE IV

| Expt. No. | $NH_4F$ in mg/100 g $H_3PO_4$ | $NH_4F$ in wt. % of $F/P_2O_5$ | Dispersant in g/100 g of $H_3PO_4$ | Dispersant wt. %/$P_2O_5$ | Uranium precipitation efficiency, % |
|---|---|---|---|---|---|
| 24 | 4000 mg | 6.8% | 48 g acetone | 160 | 95%—98% |
| 25 | 3100 mg | 5.2% | 85 g acetone | 280 | 95%—98% |
| 26 | 860 mg | 1.5% | 186 g acetone | 613 | 95%—98% |
| 27 | 100 mg | 0.17% | 272 g acetone | 897 | 95%—98% |
| 28 | 1200 mg | 2% | 120 g MEK | 396 | 95%—98% |

Example 29

In the same way as in Example 22, 100 grams of wet-process phosphoric acid, of the same composition as in Example 22, were treated with 4 grams of iron, 2500 mg of potassium fluoride (2.8 wt. % $F/P_2O_5$) and 160 grams of acetone (528 wt. %/$P_2O_5$). The uranium precipitation efficiency was 90%.

6

**0 015 589**

### Examples 30—33

In the same way as in Example 22, 100 grams of wet-process phosphoric acid, with a $P_2O_5$ content of 52%, were treated with 4 grams of iron, varying amounts of ammonium fluoride and organic dispersant. The results are summarized in Table V below.

#### TABLE V

| Expt. No. | $NH_4F$ in mg/100 g $H_3PO_4$ | $NH_4F$ in wt. % F rel. to $P_2O_5$ | Dispersant in g/100 g $H_3PO_4$ | Dispersant in wt. % rel. to $P_2O_5$ | Uranium precipitation efficiency, % |
|---|---|---|---|---|---|
| 30 | 4400 mg | 4.3% | 112 g acetone | 215% | >90% |
| 31 | 3100 mg | 3.0% | 143 g MEK | 275% | >90% |
| 32 | 1000 mg | 1.0% | 216 g acetone | 415% | >90% |
| 33 | 400 mg | 0.4% | 247 g acetone | 475% | >90% |

### Example 34

An amount of 100 g of wet-process phosphoric acid with a $P_2O_5$ content of 30% and a sulphate content of 1.6% by weight was introduced into a beaker. While this was being stirred, 3.7 g of solid $BaCO_3$ were added, whereupon a precipitate formed. After 1 hour's settling the precipitate was filtered off.

To the filtrate 76 mg of solid ammonium fluoride were added, after which the mixture was stirred for about 1 minute. Subsequently 4 g of iron wire were added and the mixture was stirred for 30 minutes, after which the iron was removed from the liquid with a magnet.

To the remaining liquid 204 g of acetone were added, whereupon a precipitate formed. After 1 hour's settling the precipitate was filtered off.

The filtrate was vacuum-distilled, yielding acetone as top product and a phosphoric acid solution as bottom product. The uranium precipitation efficiency was more than 90%.

### Examples 35—43

In the same way as in Example 34, 100 g of wet-phosphoric acid of the same composition as in Example 34 were treated with 3.7 g of $BaCO_3$, 4 g of iron, varying quantities of ammonium fluoride and organic dispersant. Examples 41, 42 and 43 are comparative examples, in which no $BaCO_3$ was added. The results are summarized in Table VI below.

#### TABLE VI

| Expt. No. | $NH_4$ in wt. % F in rel. to $P_2O_5$ | Dispersant in wt. % in rel. to $P_2O_5$ | Uranium precipitation efficiency, % |
|---|---|---|---|
| 34 | 0.07 | 680 wt. % of acetone | >90 |
| 35 | 0.4 | 560 wt. % of acetone | >90 |
| 36 | 0.5 | 533 wt. % of MEK | >90 |
| 37 | 0.5 | 533 wt. % of acetone | >90 |
| 38 | 1.7 | 350 wt. % of acetone | >90 |
| 39 | 1.7 | 350 wt. % of MEK | >90 |
| 40 | 3.3 | 250 wt. % of acetone | >90 |
| 41 | 1.7 | 590 wt. % of acetone | >90 |
| 42 | 2.2 | 533 wt. % of acetone | >90 |
| 43 | 1.7 | 350 wt. % of acetone | 63 |

7

**0 015 589**

### Example 44—50

In the same way as in Example 34, 100 g of wet-process phosphoric acid with a $P_2O_5$ content of 52% and a sulphate content of 2.6% were treated with 4.4 g of solid $BaCO_3$, 4 g of iron and varying quantities of ammonium fluoride and acetone. Examples 48, 49, and 50 are comparative examples, in which no $BaCO_3$ was added. The results are summarized in Table VII below.

TABLE VII

| Expt. No. | $NH_4F$ in wt. % F in rel. to $P_2O_5$ | Acetone in wt. % in rel. to $P_2O_5$ | Uranium precipitation efficiency, % |
|---|---|---|---|
| 44 | 2.0 | 210 | >90 |
| 45 | 1.9 | 220 | >90 |
| 46 | 0.5 | 400 | >90 |
| 47 | 1 | 270 | >90 |
| 48 | 1.9 | 320 | >90 |
| 49 | 1.5 | 400 | >90 |
| 50 | 1.0 | 270 | 57 |

The compositions of both the wet-process phosphoric acid used in these experiments and the product acid obtained in Experiments 46 and 49 were determined. The results are shown in Table VIII below.

TABLE VIII

| | Original phosphoric acid | Phosphoric acid after uranium precipitation without $SO_4$ removal (Example 49) | Phosphoric acid after uranium precipitation with $SO_4$ removal (Example 46) |
|---|---|---|---|
| $P_2O_5$ | 52% | 51% | 51% |
| $SO_4$ | 2.6% | 1.7 % | 0.1% |
| F | 0.7% | 0.2 % | 0.1% |
| Ca | 0.12% | 0.05% | 0.02% |
| Al | 0.25% | 0.01% | <0.01% |
| Fe | 0.2% | 0.2% | 0.2% |
| Cd | 10 ppm | <5 ppm | <3 ppm |

From these analytical results it is obvious that the resulting phosphoric acid after uranium precipitation with prior sulphate removal contained a much lower content of impurities than both the original wet-process phosphoric acid and the product after uranium precipitation without prior sulphate removal.

### Example 51

An amount of 1.88 g of solid calcium carbonate was added to 100 g of wet-process phosphoric acid with a $P_2O_5$ content of 30% and a sulphate content of 1.6% by weight which was meanwhile being stirred. Subsequently, 16 g of acetone were added. After 1 hour's settling the precipitate formed was filtered off, yielding 3.1 g of solid substance.

To the filtrate 250 mg of ammonium fluoride (0.4 wt. % F in relation to $P_2O_5$) were added and, after stirring for about 1 minute, 4 g of iron wire. The mixture was stirred for 30 minutes, after which

8

the iron was removed from the liquid with a magnet.

To the remaining solution 140 g of acetone (462 wt. % acetone in relation to $P_2O_5$) were added, whereupon a precipitate formed. After 1 hour's settling the precipitate was filtered off, yielding 4.2 g of solid substance.

The filtrate was vacuum-distilled, yielding acetone as top product and a phosphoric acid solution as bottom product. The uranium precipitation efficiency was more than 95%.

**Claims**

1. Process for recovering a uranium-containing concentrate and purified phosphoric acid from wet-process phosphoric acid by treating this with a precipitant and a reducing agent, in the presence of an organic dispersant, separating out the resultant precipitate, and recovering the phosphoric acid from the remaining mixture of phosphoric acid and dispersant, this process being characterized in that an aliphatic ketone is used as organic dispersant.

2. Process according to claim 1, characterized in that the aliphatic ketone used is acetone or methylethylketone.

3. Process according to claim 1 or 2, wherein ammonia or an ammonium salt is used as precipitant, characterized in that an amount of 250 to 900% by weight of ketone and 5 to 0.06% by weight of precipitant, calculated as $NH_3$, and calculated in relation to the amount by weight of $P_2O_5$ in the phosphoric acid, are applied.

4. Process according to claim 3, characterized in that use is made of phosphoric acid having a $P_2O_5$-concentration of at least 50% by weight, and an amount of 300 to 600% by weight of ketone and from 1 to 0.1% by weight of precipitant, calculated as $NH_3$, and calculated in relation to the amount by weight of $P_2O_5$ in the phosphoric acid, are applied.

5. Process according to claim 1 or 2, wherein an inorganic fluorine compound is used as precipitant, characterized in that an amount of 120 to 900% by weight of ketone and 7 to 0.15% by weight of fluorine compound, calculated as fluorine, and calculated in relation to the amount by weight of $P_2O_5$ in the phosphoric acid, are applied.

6. Process according to claim 5, characterized in that an amount of 160 to 450% by weight of ketone and 5 to 0.5% by weight of fluorine compound, calculated as fluorine, and calculated in relation to the amount of $P_2O_5$ in the phosphoric acid, are applied.

7. Process according to claim 5 or 6, wherein ammoniumfluoride is used as precipitant and acetone as dispersant, characterized in that an amount of 200 to 450% by weight of acetone and 3 to 0.5% by weight of ammoniumfluoride, calculated as fluorine, and calculated in relation to the amount by weight of $P_2O_5$ in the phosphoric acid, are applied.

8. Process according to any one of the claims 1—7, characterized in that the sulphate content of the phosphoric acid started from has been adjusted to a value below 0.6% by weight, calculated in relation to the amount by weight of $P_2O_5$, by adding to the phosphoric acid a compound that reacts with sulphate ions to form a compound that is insoluble in phosphoric acid, and separating out the precipitate formed.

9. Process according to claim 8, characterized in that a calcium compound and/or barium compound that is soluble in phosphoric acid and reactive with sulphate ions is added to the phosphoric acid to be treated and the calcium sulphate and/or barium sulphate formed is separated.

10. Process according to either of the claims 8 or 9, characterized in that calcium carbonate or calcium sulphide and/or barium carbonate or barium sulphide is added to the phosphoric acid to be treated.

11. Process according to any one of the claims 8—10, characterized in that as compound reactive with sulphate ions a calcium compound is added in the presence of an aliphatic ketone in an amount of up to 10% by weight of the total amount of aliphatic ketone required for the uranium precipitation.

12. Process according to any one of the claims 8—11, characterized in that an amount of compound reactive with sulphate ions is added that is at least equivalent to the amount of sulphate in the phosphoric acid.

**Patentansprüche**

1. Verfahren zur Gewinnung eines Uran enthaltenden Konzentrats und gereinigter Phosphorsäure aus Nassphosphorsäure durch Behandlung der Nassphosphorsäure mit einem Fällungsmittel und einem Reduktionsmittel in Gegenwart eines organischen Dispersionsmittels, indem das erhaltene Präzipitat abgeschieden und die Phosphorsäure aus dem verbleibenden Gemisch von Phosphorsäure und Dispersionsmittel gewonnen wird, wobei dieses Verfahren dadurch gekennzeichnet ist, dass ein aliphatisches Keton als organisches Dispersionsmittel verwendet wird.

2. Verfahren nach Anspruch 1, dadurch gekennzeichnet, dass Aceton oder Methyläthylketon als aliphatisches Keton verwendet werden.

3. Verfahren nach Anspruch 1 oder 2, wobei Ammoniak oder ein Ammoniumsalz als Fällungsmittel verwendet werden, dadurch gekennzeichnet, dass eine Menge von 250 bis 900 Gew.-% Keton und 5 bis 0,06 Gew.-% Fällungsmittel, berechnet als $NH_3$, und berechnet bezogen auf die Gewichtsmenge von $P_2O_5$ in der Phosphorsäure, verwendet wird.

4. Verfahren nach Anspruch 3, dadurch gekennzeichnet, dass eine Phosphorsäure verwendet wird mit einer $P_2O_5$-Konzentration von mindestens 50 Gew.-% sowie eine Menge von 300 bis 600 Gew.-% Keton und 1 bis 0,1 Gew.-% Fällungsmittel, berechnet als $NH_3$, und berechnet bezogen auf die Gewichtsmenge von $P_2O_5$ in der Phosphorsäure.

5. Verfahren nach Anspruch 1 oder 2, wobei eine anorganische Fluorverbindung als Fällungsmittel verwendet wird, dadurch gekennzeichnet, dass eine Menge von 120 bis 900 Gew.-% Keton und 7 bis 0,15 Gew.-% Fluorverbindung, berechnet als Fluor, und berechnet bezogen auf die Gewichtsmenge von $P_2O_5$ in der Phosphorsäure, verwendet wird.

6. Verfahren nach Anspruch 5, dadurch gekennzeichnet, dass eine Menge von 160 bis 450 Gew-% Keton und 5 bis 0,5 Gew-% Fluorverbindung, berechnet als Fluor, und berechnet bezogen auf die Gewichtsmenge von $P_2O_5$ in der Phosphorsäure, verwendet wird.

7. Verfahren nach Anspruch 5 oder 6, wobei Ammoniumfluorid als Fällungsmittel und Aceton als Dispersionsmittel verwendet werden, dadurch gekennzeichnet, dass eine Menge von 200 bis 450 Gew.-% Aceton und 3 bis 0,5 Gew.-% Ammoniumfluorid, berechnet als Fluor, und berechnet bezogen auf die Gewichtsmenge von $P_2O_5$ in der Phosphorsäure, verwendet wird.

8. Verfahren nach einem der Ansprüche 1—7, dadurch gekennzeichnet, dass der Sulphatgehalt der Ausgangs-Phosphorsäure auf einen Wert unter 0,6 Gew.-%, berechnet bezogen auf die Gewichtsmenge von $P_2O_5$, eingestellt worden ist, indem der Phosphorsäure eine Verbindung zugesetzt wird, die mit Sulphationen reagiert unter Bildung einer in Phosphorsäure unlöslichen Verbindung, und das gebildete Präzipitat ausgeschieden wird.

9. Verfahren nach Anspruch 8, dadurch gekennzeichnet, dass eine Calciumverbindung und/oder Bariumverbindung, die in Phosphorsäure löslich ist und mit Sulphationen reagiert, der zu behandelnden Phosphorsäure zugesetzt wird und das gebildete Calciumsulphat und/oder Bariumsulphat ausgeschieden wird.

10. Verfahren nach einem der Ansprüche 8 oder 9, dadurch gekennzeichnet, dass Calciumcarbonat oder Calciumsulphid und/oder Bariumcarbonat oder Bariumsulphid der zu behandelnden Phosphorsäure zugesetzt wird.

11. Verfahren nach einem der Ansprüche 8—10, dadurch gekennzeichnet, dass als mit Sulphationen reagierende Verbindung eine Calciumverbindung zugesetzt wird in Anwesenheit eines aliphatischen Ketons in einer Menge bis zu 10 Gew.-% der für die Uran-Ausfällung erforderlichen Gesamtmenge des aliphatischen Ketons.

12. Verfahren nach einem der Ansprüche 8—11, dadurch gekennzeichnet, dass eine Menge einer mit Sulphationen reagierenden Verbindung zugesetzt wird, die der Sulphatmenge in der Phosphorsäure mindestens äquivalent ist.

**Revendications**

1. Procédé pour récupérer de l'acide phosphorique purifié et un concentré contenant de l'uranium à partir d'un acide phosphorique par voie humide, procédé consistant à traiter cet acide phosphorique à l'aide d'un agent de précipitation et d'un agent réducteur, en présence d'un dispersant organique; à séparer le précipité résultant; et à récupérer l'acide phosphorique du mélange restant d'acide phosphorique et de dispersant, procédé caractérisé en ce que le dispersant organique utilisé est une cétone aliphatique.

2. Procédé selon la revendication 1, caractérisé en ce que la cétone aliphatique utilisée est l'acétone ou la méthyléthylcétone.

3. Procédé selon la revendication 1 ou 2, dans lequel l'agent de précipitation utilisé est l'ammoniac ou un sel d'ammonium, procédé caractérisé en ce qu'il utilise 250 à 900% en poids de cétone et 5 à 0,06% en poids d'agent de précipitation, calculé en $NH_3$, les pourcentages étant calculés par rapport au poids de $P_2O_5$ dans l'acide phosphorique.

4. Procédé selon la revendication 3, caractérisé en ce qu'il utilise de l'acide phosphorique ayant une teneur en $P_2O_5$ d'au moins 50% en poids, et 300 à 600% en poids de cétone et 1 à 0,1% en poids d'un agent de précipitation, calculé en $NH_3$, les pourcentages étant calculés par rapport au poids de $P_2O_5$ dans l'acide phosphorique.

5. Procédé selon la revendication 1 ou 2, dans lequel l'agent de précipitation utilisé est un composé inorganique du fluor, procédé caractérisé en ce qu'il utilise 120 à 900% en poids de cétone et 7 à 0,15% en poids du composé du fluor, calculé en fluor, les pourcentages étant calculés par rapport au poids de $P_2O_5$ dans l'acide phosphorique.

6. Procédé selon la revendication 5, caractérisé en ce qu'il utilise 160 à 450% en poids de cétone et 5 à 0,5% en poids du composé du fluor, calculé en fluor, les pourcentages étant calculés par rapport à la quantité de $P_2O_5$ dans l'acide phosphorique.

7. Procédé selon la revendication 5 ou 6, dans lequel l'agent de précipitation est le fluorure d'ammonium et le dispersant est l'acétone, procédé caractérisé en ce qu'il utilise 200 à 450% en poids d'acétone et 3 à 0,5% en poids de fluorure d'ammonium, calculé en fluor, les pourcentages étant calculés par rapport au poids de $P_2O_5$ dans l'acide phosphorique.

8. Procédé selon l'une quelconque des revendications 1 à 7, caractérisé en ce que le teneur de l'acide phosphorique initial en sulfate est ajustée à une valeur inférieure à 0,6% en poids par rapport au poids de $P_2O_5$, cet ajustement consistant à ajouter à l'acide phosphorique un composé réagissant sur les ions sulfate pour former un composé insoluble dans l'acide phosphorique, et à séparer le précipité ainsi formé.

9. Procédé selon la revendication 8, caractérisé en ce qu'on ajoute à l'acide phosphorique à traiter un composé du calcium et/ou du baryum, soluble dans l'acide phosphorique et réagissant sur les ions sulfate, cette opération étant suivie de la séparation du sulfate de calcium et/ou de baryum formé.

10. Procédé selon l'une quelconque des revendications 8 ou 9, caractérisé en ce que l'on ajoute à l'acide phosphorique à traiter du carbonate de calcium ou du sulfure de calcium et/ou du carbonate de baryum ou du sulfure de baryum.

11. Procédé selon l'une quelconque des revendications 8 à 10, caractérisé en ce qu'on ajoute, en tant que composé réagissant sur les ions sulfate, un composé du calcium en présence d'une cétone aliphatique, selon une quantité allant jusqu'à 10% en poids de la quantité totale de cétone aliphatique nécessaire à la précipitation de l'uranium.

12. Procédé selon l'une quelconque des revendications 8 à 11, caractérisé en ce que l'on ajoute une quantité du composé réagissant sur les ions sulfate au moins équivalente à la quantité de sulfate se trouvant dans l'acide phosphorique.